# DEMANDE DE BREVET EUROPEEN

(11) **EP 3 335 584 A1**
(43) Date de publication de la demande: **20.06.2018**
(21) Numéro de dépôt: 16204579.3
(22) Date de dépôt: 16.12.2016
(51) Int. Cl.: A44C 27/00, A44C 5/00, B29C 47/06

(54) **PIÈCE D'HABILLAGE AVEC DÉCOR POUR MONTRE OU BIJOU ET SON PROCÉDÉ DE FABRICATION**

(71) Demandeur: The Swatch Group Research and Development Ltd, 2074 Marin (CH)
(72) Inventeur: Rannoux, Claire, 1110 Morges (CH); François, Nicolas, 2000 Neuchâtel (CH)
(74) Mandataire: Ravenel, Thierry Gérard Louis

(57) **Abrégé**

La présente invention se rapporte à un procédé de fabrication d'une pièce d'habillage pour montre ou bijou, notamment d'un bracelet (5), comportant les étapes de :
- mise à disposition d'un substrat (1) comportant une première face opposée à une seconde face,
- revêtement par co-extrusion sur la première face et sur la seconde face dudit substrat (1) avec respectivement une première et une seconde bandes (2) en matériau synthétique; la première bande (2) formant sur la première face une couche transparente ou translucide permettant de maintenir en tout ou en partie le substrat (1) visible.

## Description

### OBJET DE L'INVENTION

La présente invention se rapporte au domaine de l'horlogerie et de la bijouterie. Plus particulièrement, elle se rapporte à un procédé de revêtement par co-extrusion sur un substrat pour fabriquer, entre autres, des bracelets.

### ARRIÈRE-PLAN TECHNOLOGIQUE ET ÉTAT DE LA TECHNIQUE

Les bracelets en plastique présentant des couleurs différentes, des décors ou intégrant des effets visuels particuliers sont très prisés par les clients. Ce type de bracelet peut être fabriqué par moulage, surmoulage ou bi-injection de matières plastiques de différentes couleurs. Ce sont des procédés de fabrication en lots à étapes multiples, ce qui les rend peu appropriés à une production industrielle de masse peu coûteuse.

Dans le passé, il a été proposé de réaliser des bracelets par un procédé d'extrusion qui est un procédé moins onéreux. La fabrication de bracelets par extrusion s'est généralement limitée à la fabrication de bracelets de forme simple, unicolores et réalisés dans un même matériau comme décrit dans le document FR 2 121 864. Dernièrement, il a été proposé dans la demande EP 16150493 de co-extruder des matériaux de couleurs ou de propriétés différentes pour former des bracelets aux géométries et aux propriétés plus élaborées.

Cependant, ces procédés ne permettent pas de réaliser des motifs complexes qui impliquent des géométries particulières et une très grande précision comme dans le cas de paysages, de figurines, de messages, etc. Il est en outre difficile d'intégrer des matières autres que des matières plastiques qui pourraient conduire à un effet esthétique original.

En général, les bracelets avec des motifs complexes sont réalisés par impression numérique sur des substrats unicolores fabriqués par moulage. L'impression numérique permet d'accéder à une grande variété de designs. En revanche, le procédé présente plusieurs inconvénients : le motif est uniquement en surface, il est donc sensible à l'usure mécanique. Cela signifie qu'au fil du temps, le motif s'efface. Cette usure est en général non régulière ce qui conduit à un aspect esthétique du bracelet très rapidement non satisfaisant. Le motif est également sensible aux agressions UV et aux agressions chimiques. Les bracelets fabriqués par ce type de procédé possèdent donc des motifs qui évoluent dans le temps avec l'apparition d'effets non désirés et non esthétiques. Le document FR2639870 résout ce problème en proposant un bracelet formé avec un corps thermoplastique, un film imprimé et une couche protectrice transparente. Cependant le procédé de fabrication proposé dans ce document est un procédé de moulage par injection II s'ensuit des problèmes de positionnement et de maintien en place du film imprimé dans le moule. De plus le procédé est long (impression et découpe du film imprimé, positionnement du film dans le moule, moulage, et réalisation de la couche de protection transparente) et nécessite plusieurs opérations manuelles. Ceci empêche des cadences élevées..

Un autre inconvénient de l'impression en surface du bracelet est le manque d'adhésion des encres d'impression numérique sur des bracelets en plastique type silicone qui ont des énergies de surface faible. De plus, une modification de la formulation plastique de base du bracelet implique souvent de réadapter la formulation de l'encre.

### RÉSUMÉ DE L'INVENTION

La présente invention a pour objet de fabriquer des pièces d'habillage et plus particulièrement des bracelets présentant des motifs complexes à l'aide d'un procédé simple et peu coûteux et pouvant être compatible avec des cadences de production élevées. La présente invention vise plus précisément à intégrer au sein de la pièce d'habillage un décor et, ce, sans problème de positionnement ou d'adhésion de l'encre dans le cas d'un décor imprimé. La présente invention vise aussi à mettre au point un procédé de fabrication garantissant la stabilité dans le temps du décor imprimé.

A cette fin l'invention concerne un procédé de fabrication d'une pièce d'habillage pour montre ou bijou, notamment d'un bracelet, comportant les étapes de :
- mise à disposition d'un substrat comportant une première face opposée à une seconde face,
revêtement par co-extrusion sur la première face et sur la seconde face dudit substrat avec respectivement une première et une seconde bandes en matériau synthétique; la première bande formant sur la première face une couche transparente ou translucide permettant de maintenir en tout ou en partie le substrat visible.

Selon un mode réalisation avantageux du procédé de fabrication de l'invention, une étape d'impression et/ou gravure d'un décor sur la première face du substrat est prévue avant l'étape de revêtement par co-extrusion des première et deuxième faces du substrat et de préférence une pluralité de décors distincts sont imprimés et/ou gravés l'un à la suite de l'autre sur la première face du substrat.

Selon une variante préférée une étape de mise à disposition de fichiers 2D ou 3D comprenant les données personnalisées relatives à l'impression ou au gravage de chaque décor est prévue avant l'étape d'impression.
D'autres formes d'exécution particulières sont reprises dans les revendications dépendantes.

### BRÈVE DESCRIPTION DES FIGURES

Les caractéristiques et avantages de la présente invention apparaîtront à la lecture de la description détaillée ci-dessous faisant référence aux figures suivantes.
La figure 1 représente une vue schématique des extrudeuses en amont de la filière de co-extrusion pour la réalisation du procédé selon l'invention.
La figure 2 illustre le procédé d'impression de séquences de motifs différents sur une bande vierge. La bande ainsi décorée est utilisée comme substrat dans le procédé de revêtement par co-extrusion selon l'invention.
La figure 3 représente selon l'invention une vue schématique de l'extrudat multicouche issu de la filière de co-extrusion et de ce même extrudat après découpe et étampage. Selon cette variante, le bracelet est co-extrudé dans le sens longitudinal du bracelet. A la figure 4, une autre variante est présentée où le bracelet est co-extrudé dans le sens transversal du bracelet. L'extrudat après découpe est également représenté. Il présente à ses extrémités latérales des structures tubulaires creuses utiles pour la fixation ultérieure du bracelet au boîtier.
La figure 5 représente une vue partielle en perspective d'une montre avec un bracelet obtenu selon le procédé de l'invention et fixé au boîtier avec une construction de type NATO.
La figure 6 représente une vue en perspective d'une montre avec un bracelet fabriqué selon le procédé de co-extrusion de l'invention. La bande supérieure du bracelet présentent des zones en relief séparées par des creusures. Bien que non illustré, la bande supérieure est transparente ou translucide pour visualiser le décor de la bande centrale.

### DESCRIPTION DÉTAILLÉE DE L'INVENTION

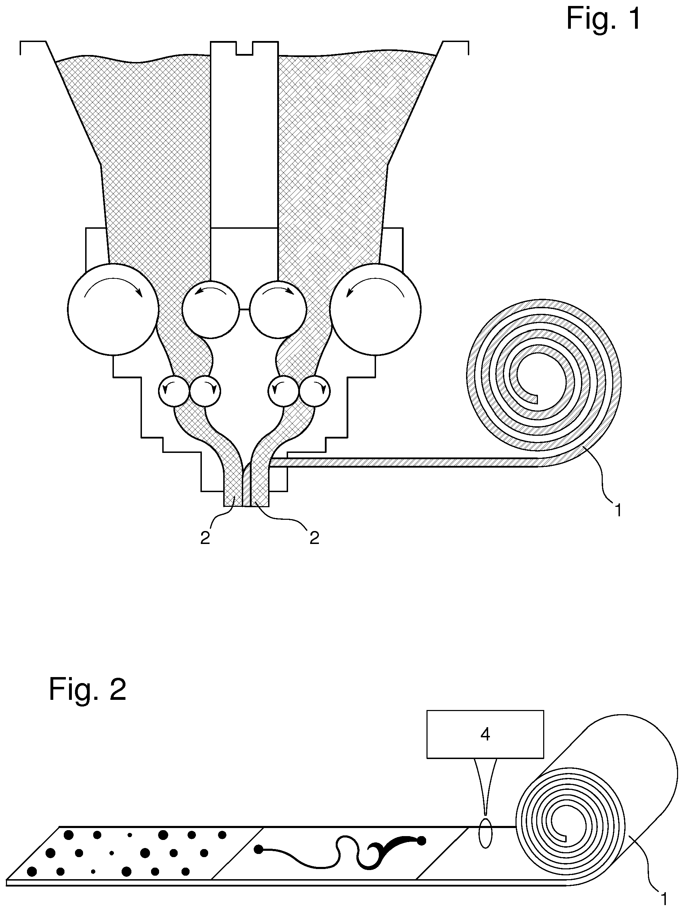

La présente invention se rapporte à un procédé de fabrication de pièces d'habillage pour l'horlogerie ou la bijouterie par revêtement d'un substrat par co-extrusion, communément *co-extrusion coating* en anglais. On entend par pièces d'habillage notamment le bracelet, la boite de montre et ses éléments constitutifs, la lunette ou encore le cadran. Ce procédé est plus particulièrement décrit ici pour la fabrication de bracelets. Le procédé consiste à enrober un substrat présentant un décor complexe et/ou une texture avec des bandes de matières synthétiques. La figure 1 illustre schématiquement le procédé avec la bobine de bande décorative formant le substrat 1 revêtue respectivement sur chaque face par co-extrusion d'une matière 2 synthétique. Selon l'invention, le revêtement en regard du décor est au moins en partie transparent ou translucide afin de pouvoir visualiser les motifs du décor.

La bande décorative est formée de n'importe quel substrat souple et capable de résister pendant quelques secondes à des températures élevées de l'ordre de 200°C. Elle a typiquement une épaisseur comprise entre 50 µm et 2 mm et préférentiellement entre 100 et 500 µm.

Le motif peut être uniforme tout le long de la bande. Par exemple, la bande décorative peut être une bande textile naturelle ou synthétique (non tissé, unidirectionnel, tissé, tressé, tricoté) notamment réalisée dans les matières suivantes : lin, coton, chanvre, laine, polyester, polyamidepolyurethanne. La bande décorative peut être également une bande de papier photo, une feuille métallique, une bande adhésive intégrant des particules minérales comme du sable, des particules organiques comme des fibres de bois, des matières végétales ou des particules métalliques comme des feuilles d'or. La bande décorative peut être également une bande de thermoplastique élastomère tel que : une bande en TPU, TPI, TPE-O (Oléfines thermoplastiques), en TPE-S - (thermoplastiques styréniques), en TPE-E (thermoplastique copolyester), en TPE-A (thermoplastique copolyamide) ou en en TPE-V et TPSi-V (combinaison de thermoplastique et de silicone réticulé). La bande décorative peut également être une bande en PVC, en PET, en certaines variétés de polycarbonate ou PC, en caoutchouc naturel ou synthétique. La bande peut être utilisée brute et, dans ce cas, le décor est apporté par la matière elle-même avec son aspect fibre naturelle, son éclat métallique, etc. La bande peut être aussi décorée par les procédés d'impression classique tels que, par exemple, la tampographie, la sérigraphie, l'offset, la flexographie, l'impression numérique. En particulier, l'impression sur substrat peut permettre d'intégrer dans le décor des pigments colorés, des composés ayant des propriétés fluorescentes, phosphorescentes, thermochromiques ou photochromiques. La bande peut être aussi décorée par les procédés de gravure en ligne type calandrage. D'un point de vue industriel, ce procédé est bien adapté à la fabrication de collections de bracelets. Au sein d'une même collection, les bracelets ont un design identique et la fabrication d'une nouvelle collection implique uniquement le changement de la bobine de bande décorative.

Selon une variante de l'invention, le motif est imprimé à la demande sur le substrat vierge en bande. Plusieurs séquences de motifs différents peuvent ainsi être imprimées et/ou gravés à la suite sur une même bande 1 comme illustré à la figure 2. L'impression est préférentiellement réalisée par impression numérique pour permettre une plus grande flexibilité. Dans ce cas, les bandes en thermoplastique élastomère (TPE-O, TPU, TPI, TPE-S, TPSi-v, TPE-v), en caoutchouc, en PET, les bandes textiles synthétiques ou naturelles, (en particulier les cuirs synthétiques) etc. sont particulièrement adaptées. D'un point de vue industriel, ce procédé de masse est particulièrement approprié pour la fabrication de bracelets personnalisés. Le client choisit son design (dessin, photo personnelle, etc.) et, éventuellement le type de substrat, en ligne ou en boutique, son design de préférence sous forme d'un fichier numérique est traité pour s'adapter aux dimensions du substrat, puis le motif 2D ou 3D est imprimé par impression numérique sur une portion de bande de substrat vierge de longueur correspondant à la largeur ou à la longueur d'un brin de bracelet. Ensuite, une fois que la bande décorative est intégralement imprimée avec les différentes séquences de motifs choisis par les clients, elle est revêtue par les deux bandes en matériau synthétique. L'extrudat multicouche ainsi formé est découpé au jet d'eau, au laser, par couteau numérique (par exemple les machines proposées par le fabricant Zünd) ou par étampage pour conduire à un bracelet personnalisé.

Les bandes plastiques enrobantes selon l'invention sont destinées à protéger la bande décorative des agressions extérieures et à fournir un aspect esthétique et/ou visuel particulier, par exemple les bandes plastiques enrobantes peuvent être arranger pour présenter un effet loupe ou un autre effet optique analogue. Il y a une bande enrobante intérieure destinée à être en contact avec la peau et une bande enrobante extérieure positionnée sur la face opposée du substrat. Typiquement, ces bandes ont une épaisseur comprise entre 100 µm et 2 mm et, de préférence, entre 100 µm et 1 mm.

La bande plastique enrobante extérieure est au moins partiellement transparente ou translucide avec un indice de transmission supérieur à 60% selon la norme ASTM D-1003 de façon à laisser apparaître le motif de la bande décorative. Plusieurs configurations peuvent être envisagées. Dans une première variante, la bande extérieure est intégralement transparente ou translucide et laisse par conséquent apparaître le motif sur toute la surface. Dans une deuxième variante, la bande enrobante extérieure est obtenue par co-extrusion de mélanges de matériaux de différentes couleurs ou indices de réfraction, au moins un des mélanges étant transparent pour laisse apparaître le motif de la bande décorative. On peut ainsi, par exemple, réaliser sur la largeur de l'extrudat des lignes de couleur différentes tout en maintenant une zone transparente ou translucide. Cette configuration permet d'obtenir des effets de profondeur différents entre les bords et le centre du bracelet.

La bande plastique enrobante intérieure est choisie pour apporter du confort au client. Elle a une dureté comprise entre 55 et 90 shore A et peut contenir des additifs pour améliorer le confort. Par exemple, elle peut contenir des céramiques de type nitrure de bore hexagonal pour évacuer l'énergie calorifique et diminuer la sudation. Elle peut aussi contenir des fibres textiles ayant un effet capillaire afin d'évacuer la sueur, ou des sels d'aluminium pour limiter la sudation. Elle peut également contenir des agents antibactériens comme des particules d'argent ou de pyrithione de zinc pour un effet anti-odeur. Comme pour la bande extérieure, elle peut être obtenue par co-extrusion de mélanges plastiques de différentes couleurs ou de différents indices de réfraction pour offrir des effets optiques différents entre les bords et le centre du bracelet. De même, la présente invention n'exclut pas que la bande intérieure soit également au moins en partie transparente ou translucide.

Selon l'invention, les matières synthétiques utilisées lors du revêtement par co-extrusion sont des mélanges comprenant au moins un élastomère. Les élastomères préférés sont les thermoplastiques élastomères, les silicones, les caoutchoucs et les élastomères fluorés.

Plus précisément, pour la bande extérieure, les élastomères sont préférentiellement choisis parmi la liste suivante:
- TPE-O - Oléfines thermoplastiques
- TPE-S - Plus particulièrement les composés SBS, SEBS ou SEPS styrénique
- TPE-E - Composé de copolyester
- TPE-U - Polyuréthane thermoplastique
- TPE-A - Polyamide thermoplastique
- Résines ionomères
- Silicones et préférentiellement les MVQ (méthylvinylsilicones)
- Elastomères fluorés : FKM.

Plus précisément, pour la bande intérieure, les élastomères sont préférentiellement choisis parmi la liste suivante:
- TPE-O - Oléfines thermoplastiques
- TPE-S - Plus particulièrement les composés SBS, SEBS ou SEPS styrénique
- TPE-V - Plus particulièrement les composés PP/EPDM ou TPSiV (combinaison de thermoplastique et de silicone réticulé)
- TPE-E - Composé de copolyester thermoplastique
- TPE-U - Polyuréthane thermoplastique
- TPE-A - coPolyamide thermoplastique
- Résines ionomères
- Silicones et préférentiellement les MVQ (méthylvinylsilicones)
- Elastomères fluorés : FKM.

De préférence, les matières synthétiques pour la bande intérieure et la bande extérieure sont chimiquement compatibles et de préférence les mêmes pour assurer une bonne cohésion du bracelet.

Selon l'élastomère sélectionné pour ses propriétés spécifiques, le mélange pourra être complété par les charges et additifs divers désirés pour améliorer le confort du client.

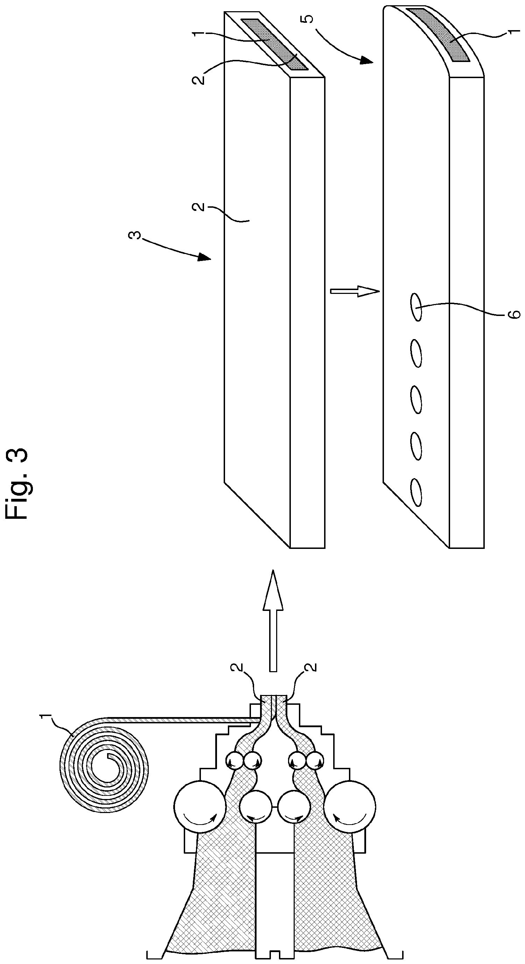

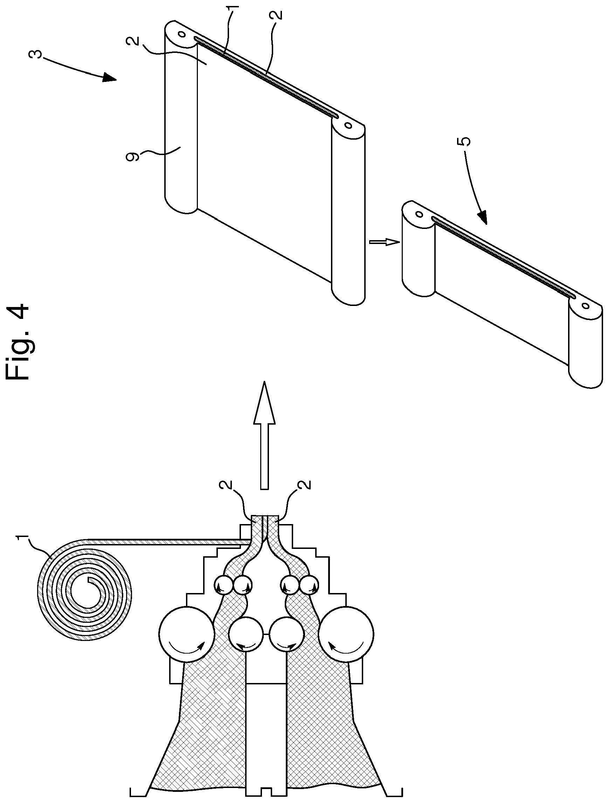

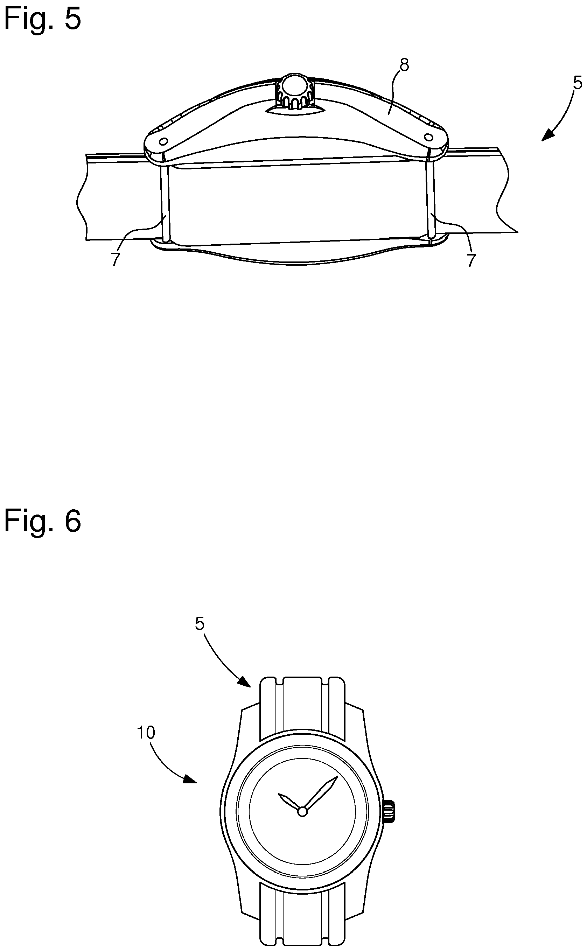

Le procédé de revêtement par co-extrusion peut consister à fabriquer un extrudat 3 multicouche ayant une largeur correspondant à la largeur du bracelet comme représenté à la figure 3. Avantageusement, le substrat 1 présente une largeur inférieure à celle des bandes 2 inférieure et supérieure afin d'être enrobé sur tout le pourtour de sa section transversale par les bandes synthétiques. Le procédé de revêtement par co-extrusion peut également consister à fabriquer un extrudat 3 multicouche ayant une largeur correspondant à la longueur d'un brin ou des deux brins du bracelet comme représenté à la figure 4. De manière similaire, la section transversale du substrat est entièrement recouverte par la matière synthétique. Selon le mode de réalisation de la figure 3, la forme du bracelet 5 et les trous 6 désirés sont obtenus par étampage, découpe laser, couteau numérique ou jet d'eau. L'extrudat multicouche obtenu après co-extrusion peut être d'une seule pièce et attaché au boîtier 8 de montre à l'aide de passants 7 disposés de chaque côté du boîtier de montre, il s'agit d'une construction dite NATO illustrée à la figure 5. Selon le mode de réalisation de la figure 4, afin de faciliter l'assemblage ultérieur du bracelet au boîtier de montre, il est avantageux de fabriquer un extrudat 3 multicouche comportant aux extrémités latérales une structure tubulaire creuse 9 en saillie destinée à recevoir une barrette permettant respectivement l'accroche à une boîte de montre avec des cornes et à une boucle, la largeur requise pour le bracelet étant préalablement obtenue par découpe laser, couteau numérique, jet d'eau ou étampage. Il est également envisageable de fabriquer un extrudat multicouche intégrant sur sa largeur le profil du boîtier encadré par les brins du bracelet, l'évidement du boîtier pouvant ultérieurement être réalisé par étampage.

On précisera en outre que la filière de co-extrusion peut présenter un profil original permettant d'extruder des bandes enrobantes avec des zones en saillie ou, de manière plus générale, présentant un relief particulier. La figure 6 illustre par exemple le profil qui pourrait être obtenu pour la bande extérieure du bracelet. Il est aussi possible sans sortir du cadre de l'invention, de profiter en plus des autres avantages du procédé d'extrusion, comme combiner plusieurs matières afin de modifier localement les propriétés mécaniques du bracelet, notamment au niveau des attaches, par exemple.

Les bracelets ainsi réalisés par co-extrusion présentent de nombreux avantages.

Le procédé selon l'invention est un procédé de masse peu coûteux qui permet d'obtenir des bracelets personnalisés avec un design choisi par le client, voire un bracelet unique. On se différencie ainsi des procédés de moulage pièce par pièce peu adaptés pour une production de masse avec des cadences élevées.

Des designs très différents peuvent être obtenus sans modification de la ligne industrielle.

Les bracelets présentent une esthétique particulière avec un effet de profondeur et un effet tridimensionnel générés par la couche épaisse et transparente de matière synthétique.

Le motif complexe se situe à l'intérieur du bracelet. Il est donc protégé des agressions extérieures (usure mécanique, agressions chimiques, UV, ...) par la bande synthétique. Le motif est imprimé sur un substrat plat et non pas sur un bracelet tridimensionnel, ce qui simplifie également fortement le procédé d'impression.

Contrairement au procédé de moulage par injection, le procédé selon l'invention permet de positionner avec précision la bande décorative au sein du matériau synthétique.

La nature de la bande décorative peut être choisie pour assurer une bonne adhésion de l'encre indépendamment de la formulation de base du bracelet.

De plus, l'intégrité du bracelet est assurée par l'adhésion entre la bande supérieure et la bande inférieure sans devoir se soucier des propriétés d'adhérence entre la bande décorative et les bandes enrobantes. Ces caractéristiques permettent d'intégrer tout type de support au sein de la pièce d'habillage, y compris des textiles.

### Légende

- (1): Substrat, aussi appelé bande décorative
- (2): Bande extérieure et bande intérieure
- (3): Extrudat
- (4): Imprimante
- (5): Bracelet
- (6): Trou
- (7): Passant
- (8): Boîtier
- (9): Structure tubulaire creuse
- (10): Montre

## Revendications

1. Procédé de fabrication d'une pièce d'habillage pour montre ou bijou, notamment d'un bracelet (5), comportant les étapes de :
- mise à disposition d'un substrat (1) comportant une première face opposée à une seconde face,
- revêtement par co-extrusion sur la première face et sur la seconde face dudit substrat (1) avec respectivement une première et une seconde bandes (2) en matériau synthétique; la première bande (2) formant sur la première face une couche transparente ou translucide permettant de maintenir en tout ou en partie le substrat (1) visible.

2. Procédé de fabrication selon la revendication 1, **caractérisé en ce qu'**il comporte, avant l'étape de revêtement par co-extrusion, une étape d'impression et/ou gravure d'un décor sur la première face du substrat (1).

3. Procédé selon la revendication 2, **caractérisé en ce qu'**une pluralité de décors distincts sont imprimés et/ou gravés l'un à la suite de l'autre sur la première face du substrat (1).

4. Procédé de fabrication selon la revendication 3, **caractérisé en ce qu'**il comporte avant impression une étape de mise à disposition de fichiers 2D ou 3D comprenant les données personnalisées relatives à l'impression ou au gravage de chaque décor.

5. Procédé selon l'une quelconque des revendications précédentes, **caractérisé en ce que** le substrat (1) est formé d'une bande textile naturelle ou synthétique, d'une bande de papier photo, d'une bande métallique, d'une bande thermoplastique élastomère, d'une bande caoutchouc, ou d'une bande adhésive.

6. Procédé selon l'une quelconque des revendications précédentes, **caractérisé en ce que** le substrat (1) comprend un matériau choisi parmi la liste constituée du lin, du coton, du chanvre, de la laine, du cuir synthétique, du polyester, du polyamide, du polyuréthanne, de thermoplastique oléfine (TPE-O), de thermoplastique polyimide (TPI) de thermoplastique uréthane (TPU), styrénique (TPE-S) ou copolyester (TPE-E) ou polyamide copolyester (TPE-A), de caoutchouc, de polychlorure de vinyl, de PET.

7. Procédé selon la revendication 5, **caractérisé en ce que** la bande adhésive comprend des particules minérales, des particules organiques ou des particules métalliques.

8. Procédé selon l'une quelconque des revendications 2 à 7, **caractérisé en ce que** l'impression permet d'intégrer dans le décor des pigments colorés, des composés luminescents, des composés thermochromes, des composés photochromes ou un mélange de ceux-ci.

9. Procédé selon l'une quelconque des revendications précédentes, **caractérisé en ce que** le substrat (1) présente une largeur inférieure à celle des première et seconde bandes (2) afin d'être enrobé par ces dernières lors de l'étape de revêtement par co-extrusion.

10. Procédé selon l'une quelconque des revendications précédentes, **caractérisé en ce que** la première bande et/ou la seconde bande (2) en matériau synthétique sont obtenues par co-extrusion de plusieurs mélanges de matériaux synthétiques se distinguant par leurs couleurs et/ou leurs indices de réfraction et/ou leurs propriétés mécaniques.

11. Procédé selon l'une quelconque des revendications précédentes, **caractérisé en ce que** les matériaux synthétiques de la première et de la seconde bandes (2) sont choisis parmi les thermoplastiques élastomères, les silicones, les caoutchoucs et les élastomères fluorés.

12. Procédé selon l'une quelconque des revendications précédentes, **caractérisé en ce que** le matériau synthétique de la seconde bande (2) comporte une charge améliorant le confort de la pièce d'habillage.

13. Procédé selon l'une quelconque des revendications précédentes, **caractérisé en ce que** l'extrudat (3) issu du revêtement par co-extrusion a une largeur correspondant à la largeur du bracelet (5) ou à la longueur d'un ou deux brins du bracelet (5).

14. Pièce d'habillage pour l'horlogerie ou la bijouterie, en particulier bracelet (5), comportant un substrat (1) plan enrobé sur tout le pourtour de sa section transversale par un ou plusieurs matériaux synthétiques, le ou les matériaux synthétiques formant au moins partiellement un revêtement transparent ou translucide.

15. Pièce d'habillage selon la revendication 14, **caractérisée en ce que** le substrat (1) comporte sur une face en regard du revêtement transparent ou translucide un décor imprimé ou gravé.
